(19) Europäisches Patentamt
European Patent Office
Office européen des brevets

(11) EP 3 763 514 A1

(12) **EUROPEAN PATENT APPLICATION**

(43) Date of publication:
**13.01.2021 Bulletin 2021/02**

(21) Application number: **19185708.5**

(22) Date of filing: **11.07.2019**

(51) Int Cl.:
***B29C 70/02*** (2006.01) ***B29C 70/08*** (2006.01)
***B29C 70/44*** (2006.01) ***B29C 70/54*** (2006.01)
***B29D 99/00*** (2010.01) *B29B 7/76* (2006.01)
*B29B 7/86* (2006.01) *B29K 75/00* (2006.01)
*B29K 675/00* (2006.01) *B29L 31/08* (2006.01)
*F03D 1/06* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Covestro Deutschland AG**
**51373 Leverkusen (DE)**

(72) Inventor: **The designation of the inventor has not yet been filed**

(74) Representative: **Levpat**
**c/o Covestro AG**
**Gebäude 4825**
**51365 Leverkusen (DE)**

(54) **A METHOD FOR PREPARING A POLYURETHANE COMPOSITE BY A VACUUM INFUSION PROCESS**

(57) The invention relates to a method for preparing a polyurethane composite by a vacuum infusion process, a polyurethane composite prepared by said method and use thereof. The method for preparing a polyurethane composite by a vacuum infusion process of the present invention can reduce raw materials and production costs.

Figure 2

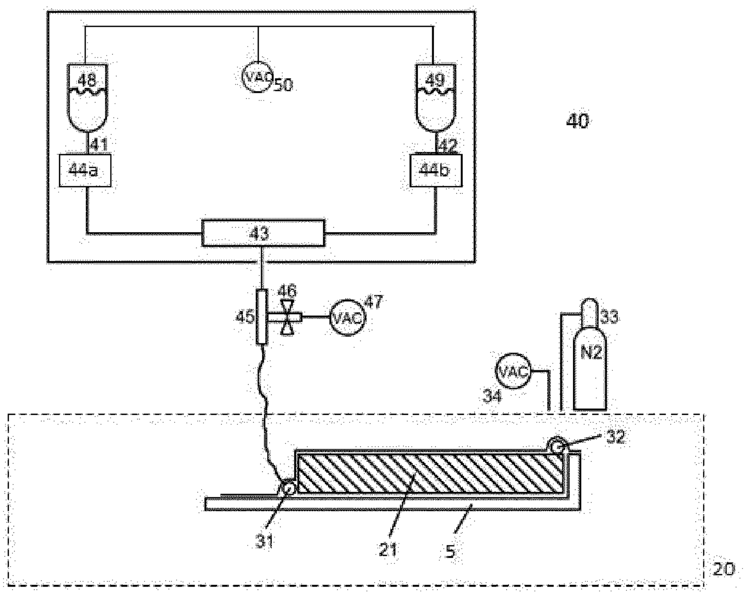


EP 3 763 514 A1

## Description

### Technical field

The present invention relates to a method for preparing a polyurethane composite by a vacuum infusion process, a composite obtained by the method and use thereof.

### Prior Art

With the development and progress of human society, the demand for energy is increasing. Traditional thermal power generation is not conducive to environmental protection. Wind power generation is rapidly developed as the most economical new energy source. In order to further enhance the competitiveness of wind power generation, the power of wind turbines is getting larger and larger. The turbine blades of wind turbines, as wind energy capture devices, are required to be longer. However, they become heavier and the cost thereof also rise. Reducing the weight and cost of wind turbine blades has become an urgent need in the industry.

Currently, vacuum-assisted resin transfer molding (VARTM) processes for producing large composite parts are commonly used in the industry. The vacuum-assisted resin transfer molding (VARTM) technology is an advanced composite manufacturing technology that has excellent applicability to large composite parts. It has the advantages of high production efficiency, high quality stability, high mechanical strength, low resin amount and environmental friendliness. At present, epoxy resins are widely used for large composite parts. Due to the high viscosity of epoxy resins, a larger channel is required to ensure the dispersion speed of the resins. The resin remaining in the flow runner and the flow mesh is removed as waste after being cured, which causes waste on costs and environmental pollution. The resin remaining in the flow grooves of the core material increases the weight of the product and increases the amount of the used resins. In particular, epoxy resins are widely used in wind turbine blades currently. Due to their high viscosity, larger channels are required to ensure resin dispersion speed. The amount of waste resin raw materials is relatively large, resulting in waste on costs and environmental pollution. How to reduce the waste of resin raw materials, reduce costs and protect the environment is an urgent problem to be solved in the industry.

CN201619252U discloses a vacuum infusion system with a non-uniform layered structure, which comprises a plurality of types of flow meshes laid on the surface of the non-uniform layered structure in a mold, each type of the meshes corresponding to a uniform layer, such that each combination of the flow mesh and the corresponding layer has the same permeability for the composition; a flow runner arranged above the flow mesh and connected to a feeding tube via a feeding tray; an overflow tube arranged away from and below the flow runner and connected to an suction tube via a suction tray; a vacuum pump and a pressure gauge connected to the suction tube; at least one vacuum bag covering the the flow mesh, the flow runner and the overflow tube from above, wherein the rim of the vacuum bag is sealed with the mold, and the feeding tray and the suction tray are connected to the feeding tube and the suction tube by penetrating through the vacuum bag.

CN107187080A discloses a vacuum infusion molding process for a composite thick workpiece. The vacuum infusion molding process includes the following steps: (1) laying a reinforcing glass fiber fabric layer on a mold; (2) laying an isolating film with holes and a peel ply on the surface of the reinforcing glass fiber fabric layer; (3) placing a flow mesh on the surface of the isolating film; (4) placing an isolating material and a flow runner on the flow mesh, the surface of the flow runner being covered with flow guiding materials; (5) placing an suction tube in the system and connecting to a vacuum pump, and sealing the vacuum bag film by a sealant; (6) rendering the interior of the system under a negative pressure by suction with the vacuum pump; and (7) carrying out the vacuum infusion, curing and demolding. According to the infusion molding process of the invention, the flow runner does not contact directly with a glass fiber layer for the blade root by using the isolating material. The infusion efficiency and the quality of finished products can be ensured effectively, and the problem that the flow channel turns white after molding is solved.

CN101767463A relates to a vacuum material module for fast demolding for a wind power generation blade and use thereof. The vacuum material module for fast demolding comprises a demolding material layer, an isolating film layer with holes, a flow mesh layer and an omega-shaped pipe, wherein the demolding material layer is fit with the isolating film layer with holes, the other surface of the isolating film layer with holes is fit with the flow mesh layer, the other surface of the flow mesh layer is fit with the omega-shaped pipe, and the demolding material layer, the isolating film layer with holes, the flow mesh layer and the omega-shaped pipe are combined into a whole. The use of the vacuum material module for fast demolding in the production of the wind power generation blades comprises the steps as follows: precleaning the mold; paving a product structure layer; paving the vacuum material module; vacuumizing in a sealing way; grouting in vacuum and pre-solidifying; assembling the mold and solidifying; and drawing the mold.

CN101754849B discloses use of a core block for an impregnation process as well as a composite structure comprising such a core block. The core block has a first surface and a second surface, and a number of first grooves are formed in the first surface of the core. Furthermore, a number of second grooves are formed in the second surface

of the core. The first grooves have a first height (hi) and a bottom, and the first grooves and the second grooves are part of a resin distribution network formed in the core block. The distance (t) between the bottom of the first grooves and the second surface of the core block is of such a size that the core block is flexible along the first grooves. Additionally, the sum of the first height and the second height is larger than the thickness of the core block, and at least one of the first grooves in the first surface of the core block crosses at least one of the second grooves in the second surface of the core block.

CN101456256A discloses a vacuum infusion forming process for a composite material wind turbine blade of megawatt grade. The process comprises a step of paving reinforced material layers in an upper mold cavity and a lower mold cavity of a mold of the blade respectively and a step of solidification, demolding and product forming, and is characterized in that it comprises the following steps between said two steps: 1) arranging injection systems on the surfaces of the reinforced material layers; 2) arranging vacuum systems on the outer surface of the injection systems covered with flow channels in the step 1); 3) checking the airtight performance of vacuumizing openings; 4) mold filling (filling with the composition); and 5), solidification, demolding and product forming.

Despite the above disclosure, there is an urgent need for a more efficient, energy-saving, and superior method for producing polyurethane composites.

**Summary of the invention**

One aspect of the invention is to provide a method for preparing a polyurethane composite by a vacuum infusion process. Said method comprises:

a) placing at least a core material having a groove spacing of > 20 mm, preferably ≥ 25 mm, at least a flow medium having a gram weight of <200 g/$m^2$, preferably ≤160 g/$m^2$, more preferably 90 to 130 g/$m^2$ and at least a reinforcing material in a mold;
b) dehumidifying the core material, the flow medium and the reinforcing material by heating under vacuum;
c) introducing the polyurethane composition into the mold via a flow runner having a diameter of <25 mm, preferably ≤20 mm, more preferably <18 mm; and
d) demolding after curing to obtain the polyurethane composite.

In actual production, the diameter of the flow runner used for vacuum infusion of epoxy resins is usually 25 mm or more. Depending on the size of the different composite parts, it is necessary to use flow runners of different diameters. In general, a flow runner having a diameter of 20 mm, 18 mm or less can be used for the method of the present invention. That is, the diameter of the flow runner can be reduced by 20%, preferably by about 28%. Waste resin raw materials can be significantly reduced.

Preferably, the step b) further comprises:

after placing the core material, the flow medium and the reinforcing material in the mold,
covering the core material, the flow medium and the reinforcing material with a first film,
sealing the rim of the first film with the mold, and vacuumizing between the first film and the mold;
laying a second film to cover the first film, fixing the second film, sealing the rims of the first film and the second film and preserving an air inlet channel and an air outlet channel;
heating the mold while filling hot air between the first film and the second film, providing a temperature close to the mold temperature for the upper surface of the first film.

Preferably, the heating is one, two or more selected from the group consisting of electric blanket heating, electric film heating, microwave heating, infrared heating and hot air heating.

Preferably, the reinforcing material is selected from the group consisting of entangled glass fiber layers, glass fiber woven fabrics and glass fiber gauzes, cut or ground glass fibers or mineral fibers, as well as fiber mats, fiber nonwovens and fiber knits based on polymer fibers, mineral fibers, carbon fibers, glass fibers or aramid fibers, and mixtures thereof, more preferably glass fiber mats or glass fiber nonwovens.

Preferably, the core material is preferably balsa wood, PVC foam, SAN foam, polyurethane foam, PS foam, PMI foam and PET foam.

Preferably, the flow medium comprises a peel ply. Preferably, the peel ply is a polyester peel ply.

Preferably, the polyurethane composition comprises the following components:

a component A, comprising one or more organic polyisocyanates;
a component B, comprising:

b1) one or more organic polyols, which is present in a content of 21 to 60 wt%, preferably 21 to 40 wt%, based on the total weight of the polyurethane composition as 100 wt%;
b2) one or more compounds having the structure of formula (I)

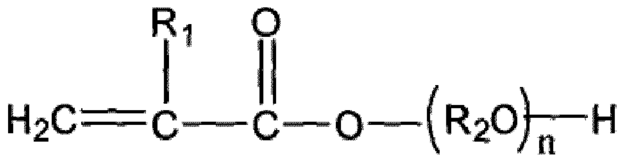

I

wherein R1 is selected from hydrogen, methyl or ethyl; R2 is selected from an alkylene group having 2 to 6 carbon atoms, 2,2-di(4-phenylene)-propane, 1,4-xylylene, 1,3-xylylene, 1,2-xylylene; n is an integer selected from 1 to 6; and

a component C, a free radical initiator.

Preferably, the organic polyol has a functionality of 1.7 to 6, preferably 1.9 to 4.5 and a hydroxyl value of 150 to 1100 mg KOH/g, preferably 150 to 550 mg KOH/g.
Preferably, b2) is present in a content of 4.6 to 33 wt%, based on the total weight of the polyurethane composition as 100 wt%.
Preferably, the component b2) is one, two or more selected from the group consisting of hydroxyethyl methacrylate, hydroxypropyl methacrylate, hydroxybutyl methacrylate, hydroxyethyl acrylate, hydroxypropyl acrylate and hydroxybutyl acrylate.
Preferably, the method further comprises:

providing a reaction injection device (40), which comprises at least two storage tanks (48, 49) for accommodating the components of the polyurethane resin, a vacuumizing device (50) and feed units (44a, 44b), wherein each of the feed units (44a, 44b) is connected to the storage tank (48, 49) via a feed line (41, 42) and a mixing unit (43), the components from the feed units (44a, 44b) are mixed together;
wherein the rim of the mold is sealed and the mold is connected to at least a first injection line (31), which can be used for vacuumizing the mold (5) and supplying the mixed components to the mold (5); and the mold comprises optionally a drying channel (32) for providing a drying gas (33); during the vacuum infusion, the drying gas is supplied to the mold to dry the core material, the flow medium and the reinforcing material (21) placed in the mold; and the mold (5) is vacuumized by means of a vacuum source (34), and the mold is connected to the reaction injection device (40) via an injection line (45) at the first injection line (31); and mold can be vacuumized via the injection line (45) through a laterally closable outlet (46), which is connected to a vacuum source (47); drying the mold (5) and the core material, the flow medium and the reinforcing material (21) contained therein, as well as the injection line (45) and optionally the feed unit (44a, 44b)/mixing unit (43), wherein optionally, the drying gas (33) can be introduced via the drying channel (32); beginning the vacuum infusion process with introducing the degassed components in the feed line (41, 42) from the storage tanks (48, 49) into the feed units (44a, 44b) of the reaction injection device (40), and obtaining the polyurethane resin from the components in the mixing unit (43), wherein the outlet (46) of the vacuum source (47) is closed before the polyurethane resin arrives;
injecting the polyurethane resin into the mold (5) via the injection line (31), while vacuumizing the mold (5) via the drying channel (32) by the vacuum source (34), wherein the injection pressure at the injection port of the injection line (31) is measured and kept lower than the external atmospheric pressure.

The viscosity of the polyurethane resin used in the present invention is greatly reduced compared with that of epoxy resins, and has good weather resistance and fatigue resistance, so that the composite has a longer service life. Further, the polyurethane composition of the present invention has a short curing cycle, can improve equipment utilization, and has a small amount of resin residue in the production process, which can lower the production cost. It is known to those skilled in the art that the resin remaining in the flow runner and the flow mesh is removed as waste after being cured, resulting in waste on costs and environmental pollution. The resin remaining in the flow grooves of the core material increases the weight of the product and increases the costs.
Through repeated experiments, we have unexpectedly discovered that the method of the present invention

can greatly reduce the resin remaining in the flow grooves of the core material, the flow mesh and the flow runner, so that the amount of waste resin is greatly reduced. The total amount of resin is also reduced to a large extent, further saving resources and costs, and being more environmentally friendly. Moreover, the polyurethane composites produced are lighter in weight, which is more conducive to installation, maintenance, maintenance and use. In addition, through experiments, we have also unexpectedly found that the method of the present invention shortens the infusion time and improves the production efficiency.

Still another aspect of the present invention is to provide a polyurethane composite obtained by the method for preparing a polyurethane composite by a vacuum infusion process of the present invention.

Yet another aspect of the invention is to provide use of the polyurethane composite of the present invention in a wind turbine blade.

Still another aspect of the invention is to provide a polyurethane product. It comprises a polyurethane composite prepared by the method for preparing a polyurethane composite by a vacuum infusion process.

Preferably, the polyurethane product is selected from the group consisting of a wind turbine blade, a radome, a single or sandwich continuous sheet, preferably a spar cap, a web plate, a blade root and/or a blade housing of a wind turbine blade.

**Description of drawings**

The present invention will now be illustrated with reference to the accompanying drawings in which:

Fig. 1 shows a mold and layers arranged thereon in the method for preparing a polyurethane composite according to example 1 of the present invention, wherein 1 represents a core material, a fiber reinforcing material, 2 represents a flow runner, 3 represents a peel ply and a flow mesh; 4 represents a vacuumizing line; 5 represents a mold.

Fig. 2 shows a reaction injection device and a mold of the present invention, wherein 5 represents a mold; 21 represents a core material, a reinforcing material and/or a flow medium; 31 represents injection line; 32 represents a drying channel; 33 represents a drying air; 40 represents a reaction injection device; 41, 42 represent feed lines; 43 represents a mixing unit; 44a, 44b represent feed units; 45 represents injection line; 46 represents closable outlet; 47 represents vacuum source; 48, 49 represent storage tanks; 34, 50 represent vacuumizing devices.

**Specific embodiments**

Various aspects of the present invention are now described in detail.

The first aspect of the present invention is to provide a method for preparing a polyurethane composite by a vacuum infusion process. Said method comprises:

a) placing at least a core material having a groove spacing of > 20 mm, preferably ≥ 25 mm, at least a flow medium having a gram weight of <200 g/m$^2$, preferably ≤160 g/m$^2$, more preferably 90 to 130 g/m$^2$ and at least a reinforcing material in a mold;
b) dehumidifying the core material, the flow medium and the reinforcing material by heating under vacuum;
c) introducing the polyurethane composition into the mold via a flow runner having a diameter of <25 mm, preferably ≤20 mm, more preferably <18 mm; and
d) demolding after curing to obtain the polyurethane composite.

Preferably, the step b) further comprises:

after placing the core material, the flow medium and the reinforcing material in the mold, covering the core material, the flow medium and the reinforcing material with a first film, sealing the rim of the first film with the mold, and vacuumizing between the first film and the mold;
laying a second film to cover the first film, fixing the second film, sealing the rims of the first film and the second film and preserving an air inlet channel and an air outlet channel;
heating the mold while filling hot air between the first film and the second film, providing a temperature close to the mold temperature for the upper surface of the first film.

Preferably, the heating is one, two or more selected from the group consisting of electric blanket heating, electric film heating, microwave heating, infrared heating and hot air heating.

Preferably, the reinforcing material is selected from the group consisting of entangled glass fiber layers, glass fiber woven fabrics and glass fiber gauzes, cut or ground glass fibers or mineral fibers, as well as fiber mats, fiber

nonwovens and fiber knits based on polymer fibers, mineral fibers, carbon fibers, glass fibers or aramid fibers, and mixtures thereof, more preferably glass fiber mats or glass fiber nonwovens.

Preferably, the core material is preferably balsa wood, PVC foam, SAN foam, polyurethane foam, PS foam, PMI foam and PET foam.

Preferably, the flow medium comprises a peel ply.

Preferably, the peel ply is a polyester peel ply.

Preferably, the polyurethane composition comprises the following components:

a component A, comprising one or more organic polyisocyanates;
a component B, comprising:

b1) one or more organic polyols, which is present in a content of 21 to 60 wt%, preferably 21 to 40 wt%, based on the total weight of the polyurethane composition as 100 wt%;
b2) one or more compounds having the structure of formula (I)

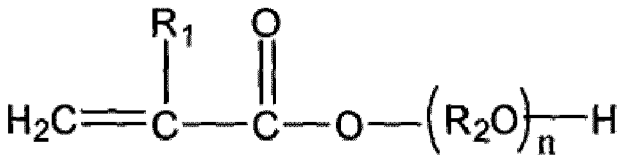

I

wherein R1 is selected from hydrogen, methyl or ethyl; R2 is selected from an alkylene group having 2 to 6 carbon atoms, 2,2-di(4-phenylene)-propane, 1,4-xylylene, 1,3-xylylene, 1,2-xylylene; n is an integer selected from 1 to 6; and

a component C, a free radical initiator.

Preferably, the organic polyol has a functionality of 1.7 to 6, preferably 1.9 to 4.5 and a hydroxyl value of 150 to 1100 mg KOH/g, preferably 150 to 550 mg KOH/g.

Preferably, b2) is present in a content of 4.6 to 33 wt%, based on the total weight of the polyurethane composition as 100 wt%.

Preferably, the component b2) is one, two or more selected from the group consisting of hydroxyethyl methacrylate, hydroxypropyl methacrylate, hydroxybutyl methacrylate, hydroxyethyl acrylate, hydroxypropyl acrylate and hydroxybutyl acrylate.

Preferably, the method further comprises:

providing a reaction injection device (40), which comprises at least two storage tanks (48, 49) for accommodating the components of the polyurethane resin, a vacuumizing device (50) and feed units (44a, 44b), wherein each of the feed units (44a, 44b) is connected to the storage tank (48, 49) via a feed line (41, 42) and a mixing unit (43), the components from the feed units (44a, 44b) are mixed together;
wherein the rim of the mold is sealed and the mold is connected to at least a first injection line (31), which can be used for vacuumizing the mold (5) and supplying the mixed components to the mold (5); and the mold comprises optionally a drying channel (32) for providing a drying gas (33); during the vacuum infusion, the drying gas is supplied to the mold to dry the core material, the flow medium and the reinforcing material (21) placed in the mold; and the mold (5) is vacuumized by means of a vacuum source (34), and the mold is connected to the reaction injection device (40) via an injection line (45) at the first injection line (31); and mold can be vacuumized via the injection line (45) through a laterally closable outlet (46), which is connected to a vacuum source (47); drying the mold (5) and the core material, the flow medium and the reinforcing material (21) contained therein, as well as the injection line (45) and optionally the feed unit (44a, 44b)/mixing unit (43), wherein optionally, the drying gas (33) can be introduced via the drying channel (32); beginning the vacuum infusion process with introducing the degassed components in the feed line (41, 42) from the storage tanks (48, 49) into the feed units (44a, 44b) of the reaction injection device (40), and obtaining the polyurethane resin from the components in the mixing unit (43), wherein the outlet (46) of the vacuum source (47) is closed before the polyurethane resin arrives; injecting the polyurethane resin into the mold (5) via the injection line (31), while vacuumizing the mold (5) via the drying channel (32) by the vacuum source

(34), wherein the injection pressure at the injection port of the injection line (31) is measured and kept lower than the external atmospheric pressure.

The polyester peel ply which can be used in the present invention refers to a peel ply made from polyester fiber. Polyester fiber (PET fiber) or PET fiber for short, commonly referred to as " dacron", is a general term for fibers made from polyesters obtained by polycondensation of various diols and aromatic dicarboxylic acids or esters thereof.

Preferably, the polyester peel ply is selected from the group consisting of plain weaves, twill weaves, satin weaves made of continuous fibers by weaving methods or fabrics made by knitting methods or fabrics directly made by stitching methods.

The flow medium that can be used in the present invention refers to a substance having a porous structure, which may be a material obtained by braiding, weaving, knitting, extruding or crocheting, a foam or a substance having a sieve or a network structure itself. Specifically, it includes but is not limited to woven flow meshs, pressed flow meshs, continuous fiber felts and hybrid flow meshs, for example, those obtained by mixing two or more of fiber fabrics such as woven flow meshs, pressed flow meshs, continuous fiber felts and chopped fiber felts. Those skilled in the art are familiar with materials that can be used as a flow medium, including but not limited to, polystyrene (PS), polyurethane (PUR), polyphenylene oxide (PPO), polypropylene, ABS, and glass fiber fabrics. Flow media are primarily used to aid in vacuumizing during the drying process and in guiding flow during the introduction of the polyurethane liquid material.

Molds that can be used in the present invention include, but are not limited to, molds of wind turbine blades and/or components thereof, molds of aircrafts and/or components thereof, molds of hulls and/or component thereof, molds of vehicle bodies and/or components thereof, and the like. In an example of the present invention, the mold is preferably a mold that can be used to produce wind turbine blades and/or components thereof in a polyurethane vacuum infusion process. The molds may have a heating function.

Optionally, the method for heating the peel ply, the fiber reinforcing material, the porous component and/or the core material of the present invention is one, two or more selected from the group consisting of mold heating, electric blanket heating, electric film heating, microwave heating, infrared heating and hot air heating. In the electric blanket heating and the electric film heating, the electric blanket and the electric film are placed under the mold or cover the film outside, and heat by supplying electric current. Other conventional heating methods in the art can all be used in the present invention.

The experimental results show that the method of the present invention provides a more efficient and energy-saving dehumidification method, thereby greatly improving the production efficiency for polyurethane composites, saving costs and being more environmentally friendly.

The polyisocyanate of the present invention may be an organic polyisocyanate which may be any aliphatic, cycloaliphatic or aromatic isocyanate known for preparing polyurethane composites. Examples thereof include, but are not limited to, toluene diisocyanate (TDI), diphenylmethane diisocyanate (MDI), polyphenylpolymethylene polyisocyanate (pMDI), 1,5-naphthalene diisocyanate (NDI), hexamethylene diisocyanate (HDI), methylcyclohexyl diisocyanate (TDI), 4,4'-dicyclohexylmethane diisocyanate, isophorone diisocyanate (IPDI), p-phenylene diisocyanate (PPDI), p-xylene diisocyanate (XDI), tetramethylxylene diisocyanate (TMXDI), and polymers or combinations thereof. The isocyanate useful in the present invention has a functionality of preferably 2.0 to 3.5, particularly preferably 2.1 to 2.9. The isocyanate has a viscosity of preferably 5 to 700 mPa·s, particularly preferably 10 to 300 mPa·s, measured at 25 ° C according to DIN 53019-1-3.

When used in the present invention, the organic polyisocyanate includes isocyanate dimer, trimer, tetramer, pentamer or combinations thereof.

In a preferred example of the present invention, the isocyanate component A) is selected from the group consisting of diphenylmethane diisocyanate (MDI), polyphenylpolymethylene polyisocyanate (pMDI), and polymers, prepolymers or combinations thereof.

Blocked isocyanates can also be used as the isocyanate component A), which can be prepared by reacting an excess of organic polyisocyanate or a mixture thereof with a polyol compound. These compounds and their preparation methods are well known to those skilled in the art.

The polyurethane reaction system of the present invention comprises one or more organic polyols. The organic polyol is present in a content of 21 to 60 wt%, based on the total weight of the polyurethane reaction system as 100 wt%. The organic polyol may be an organic polyol commonly used in the art for preparing polyurethanes, including but not limited to polyether polyols, polyether carbonate polyols, polyester polyols, polycarbonate diols, polymer polyols, vegetable oil based polyol or a combination thereof.

The polyether polyol can be prepared by a known process, for example, by reacting an olefin oxide with a starter in the presence of a catalyst. The catalyst is preferably, but not limited to, a basic hydroxide, a basic alkoxide, antimony pentachloride, boron fluoride etherate, or a mixture thereof. The olefin oxide is preferably but not limited to tetrahydrofuran, ethylene oxide, propylene oxide, 1,2-butylene oxide, 2,3-butylene oxide, styrene oxide, or a mixture thereof, particularly preferably ehylene oxide and/or propylene oxide. The starter is preferably but not limited to a polyhydroxy compound or a polyamine compound. Said polyhydroxy compound is preferably but not limited to water, ethylene glycol, 1,2-propanediol, 1,3-propanediol, diethylene glycol, trimethylolpropane, glycerol, bisphenol A, bisphenol S or a mixture thereof. Said polyamine compound is preferably but not limited to ethylene diamine, propylene diamine, butanediamine, hexanediamine, diethylenetriamine, toluenediamine or a mixture thereof.

Methods for measuring the hydroxyl value are well known to those skilled in the art and are disclosed, for example, in Houben Weyl, Methoden der Organischen Chemie, vol. XIV/2 Makromolekulare Stoffe, p. 17, Georg Thieme Verlag; Stuttgart 1963. The entire contents of this document are incorporated herein by reference.

As used herein, unless otherwise indicated, the functionality and hydroxyl value of organic polyols refer to average functionality and average hydroxyl value.

Optionally, the polyurethane reaction system of the present invention further comprises one or more compounds b2) having the structure of formula (I)

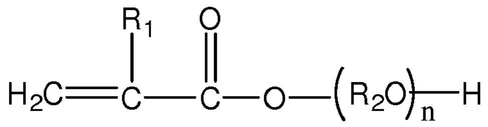

I ,

wherein $R_1$ is selected from hydrogen, methyl or ethyl; $R_2$ is selected from an alkylene group having 2 to 6 carbon atoms; and n is an integer selected from 1 to 6.

In a preferred example of the present invention, R2 is selected from the group consisting of ethylene, propylene, butylene, pentylene, 1-methyl-1,2-ethylene, 2-methyl-1,2-ethylene, 1-ethyl-1,2-ethylene, 2-ethyl-1,2-ethylene, 1-methyl-1,3-propylene, 2-methyl-1,3-propylene, 3-methyl-1,3-propylene, 1-ethyl-1,3-propylene, 2-ethyl-1,3-propylene, 3-ethyl-1,3-propylene, 1-methyl-1,4-butylene, 2-methyl-1,4-butylene, 3-methyl-1,4-butylene and 4-methyl-1,4-butylene, 2,2-di(4-phenylene)-propane, 1,4-xylylene, 1,3-xylylene, 1,2-xylylene.

In a preferred example of the present invention, b2) is selected from the group consisting of hydroxyethyl methacrylate, hydroxypropyl methacrylate, hydroxybutyl methacrylate, hydroxyethyl acrylate, hydroxypropyl acrylate, hydroxybutyl acrylate or a combination thereof.

The compound of the formula (I) can be prepared by a method generally used in the art, for example, by esterification reaction of (meth)acrylic anhydride or (meth)acrylic acid, (meth)acryloyl halide compound with HO-(R2O)n-H. The preparation method is well known to those skilled in the art, for example, in "Handbook of Polyurethane Raw Materials and Auxiliaries" (Yijun Liu, published on April 1, 2005), Chapter 3; "Polyurethane Elastomer" (Houjun Liu, published in August 2012), Chapter 2. The entire contents of these documents are incorporated herein by reference.

The polyurethane reaction system of the present invention further comprises C) a free radical initiator. The radical initiator used in the present invention may be added to the polyol component or the isocyanate component or both components. Useful free radical initiators include, but are not limited to, peroxides, persulfides, peroxycarbonates, peroxyboric acid, azo compounds, or other suitable free radical initiators which can initiate the curing of double bond containing compounds, examples of which include tert-butyl peroxy isopropyl carbonate, tert-butyl peroxy-3,5,5-trimethylhexanoate, methyl ethyl ketone peroxide, and cumene hydroperoxide. The radical initiator is usually present in a content of 0.1 to 8 wt%, based on the total weight of the polyurethane reaction system of the present invention as 100 wt%. In addition, an accelerator such as a cobalt compound or an amine compound may also be present.

Optionally, the polyurethane reaction system may further comprise a catalyst for catalyzing the reaction of isocyanate groups (NCO) with hydroxyl groups (OH). Suitable polyurethane reaction catalysts are preferably, but not limited to, amine catalysts, organometallic catalysts, or mixtures thereof. The amine catalyst is preferably but not limited to triethylamine, tributylamine, triethylenediamine, N-ethylmorpholine, N,N,N',N'-tetramethyl-ethylenediamine, pentamethyldiethylene-triamine, N-methylaniline, N,N-dimethylaniline, or a mixture thereof. The organometallic catalyst is preferably but not limited to an organotin compound such as tin (II) acetate, tin (II) octoate, tin ethylhexanoate, tin laurate, dibutyl tin oxide, dibutyltin dichloride, dibutyltin diacetate, dibutyltin maleate, dioctyltin diacetate, or a mixture thereof. The catalyst is used in an amount of 0.001 to 10 wt%, based on the total weight of the polyurethane reaction system of the present invention as 100 wt%.

In an example of the present invention, in the polyaddition reaction of isocyanate groups and hydroxyl groups, the isocyanate groups may be those contained in the organic polyisocyanate (component A) or may also be those contained in the reaction intermediate of the organic polyisocyanate (component A) with the organic polyol (component b1) or component b2)). The hydroxyl groups may be those contained in the organic polyol (component b1) or component b2)) or may also be those contained in the reaction intermediate of the organic polyisocyanate (component A) with the organic polyol (component b1) or component b2)).

In an example of the present invention, the radical polymerization reaction is a polyaddition reaction of ethylenic bonds, wherein the ethylenic bonds may be those contained in the component b2) or may also be those contained in the reaction intermediate of the component b2) with the organic polyisocyanate.

In the examples of the present invention, the polyurethane polyaddition reaction (i.e., the polyaddition reaction of isocyanate groups with hydroxyl groups) is present simultaneously with a radical polymerization reaction. It is well known to those skilled in the art that suitable reaction conditions can be selected such that the polyurethane polyaddition reaction and the radical polymerization reaction are carried out in succession. However, the polyurethane matrix thus obtained has a different structure from that of a polyurethane resin matrix obtained by simultaneous polyaddition reaction and radical polymerization reaction. Thus, the mechanical properties and processability of the prepared polyurethane composites are different.

Optionally, the above polyurethane reaction system may further comprise an auxiliary or additive, including but not limited to a filler, an internal demolding agent, a flame retardant, a smoke suppressant, a dye, a pigment, an antistatic agent, an antioxidant, a UV stabilization, a diluent, a defoaming agent, a coupling agent, a surface wetting agent, a leveling agent, a water scavenger, a catalyst, a molecular sieve, a thixotropic agent, a plasticizer, a foaming agent, a foam stabilizer, a foam homogenizing agent, an inhibitor against free radical reaction or a combination thereof. These components may optionally be included in the isocyanate component A) and/or the polyurethane reaction system B) of the present invention. These components may also be stored separately as a component D), which is mixed with the isocyanate component A) and/or the polyurethane reaction system B) of the present invention and then used for the preparation of polyurethane composites. The selection of the above-mentioned auxiliaries or additives and the above-mentioned content that is not described in detail can be found in CN104974502A, which is entirely incorporated herein by reference.

A second aspect of the present invention is to provide a polyurethane composite which is obtained by the method for preparing a polyurethane composite by a vacuum infusion process of the present invention.

A third aspect of the invention is to provide use of the polyurethane composite of the present invention in a wind turbine blade.

A fourth aspect of the invention is to provide a polyurethane product comprising a polyurethane composite obtained by the method for preparing a polyurethane composite by a vacuum infusion process.

Preferably, the polyurethane product is selected from the group consisting of a wind turbine blade, a radome, a single or sandwich continuous plate, preferably a spar cap, a web plate, a blade root and/or a blade housing of a wind turbine blade.

Unless defined otherwise, all technical and scientific terms used herein have the same meaning as they are generally understood by those skilled in the art of the present invention. When definitions of the terms in this specification conflicts with the meaning generally understood by those skilled in the art of the present invention, the definitions described herein shall apply.

Unless stated otherwise, all values expressing quantities of ingredients, reaction conditions, and the like, as used herein, are understood to be modified by the term "about."

As used herein, "and/or" refers to one or all of the elements mentioned.

"Including" and "comprising", as used herein, cover the cases where only the mentioned elements are present, as well as the cases where there are other unmentioned elements in addition to the mentioned elements.

Unless indicated otherwise, all percentages herein are percentages by weight.

The invention is now described using the examples by way of illustration without limitation.

**Examples**

Description of tested performance parameters in the examples of the present application: Functionality refers to a value determined according to the formula in the industry: functionality = hydroxyl value * molecular weight / 56100; wherein the molecular weight is determined by GPC high performance liquid chromatography;
Isocyanate index refers to a value determined by the following formula:

$$\text{Isocyanate index (\%)} = \frac{\text{Moles of isocyanate groups (NCO groups) in component A}}{\text{Moles of groups reactive toward isocyanate groups in component B}} \text{X } 100\%$$

NCO content refers to the content of NCO groups in the system, measured according to GB/T 12009.4-2016.

Description of raw materials:

Table 1 - Specifications and sources of raw materials

| Name of raw materials | Specification / type | Suppliers |
|---|---|---|
| Polyol | Baydur 78BD085 | Covestro Polymers (China) Co., Ltd. |
| Isocyanate | Desmodur 44CP20 | Covestro Polymers (China) Co., Ltd. |
| Epoxy resin | Hexion RIM 035C | Momentive Performance Materials Inc (China) |
| Epoxy curing agent | Hexion RIMH037 | Momentive Performance Materials Inc (China) |
| Biaxial glass fiber fabric (fiber reinforced material) | EKT811 (+45°/-45°)<br>Specification: 808g/$m^2$ | Chongqing Polycomp International Corp. |
| Flow runner 1 | Material: PE<br>Specification: Φ18mm | Shanghai Leadgo-tech Co., Ltd |
| Flow runner 2 | Material: PE<br>Specification: Φ8mm | Shanghai Leadgo-tech Co., Ltd |
| Flow mesh 1 | Material: PE<br>Specification: 200g/$m^2$ | Shanghai Leadgo-tech Co., Ltd |
| Flow mesh 2 | Material: PE<br>Specification: 100g/$m^2$ | Shanghai Leadgo-tech Co., Ltd |
| PVC foam core 1 | Specification: 60kg/$m^3$<br>Groove spacing 20mm*20mm | 3A Composites (China) Ltd |
| PVC foam core 2 | Specification: 60kg/$m^3$<br>Groove spacing 30mm*30mm | 3A Composites (China) Ltd |
| Polyester peel ply | Gram weight: 95g/$m^2$ | Shanghai Leadgo-tech Co., Ltd |
| Film/vacuum bag film | Thickness: 50 μm | Shanghai Leadgo-tech Co., Ltd |
| adhesive strip | Type: WD209 | Shanghai KangdDa New Materials Co., Ltd |
| Warming blanket | Specification: width of 1m, length of 2m, thickness of 30 mm | Related market |

**Description of test methods:**

Temperature test: an infrared thermometer is used to monitor the surface temperature;
Gram weight: the weight per unit area, specifically the weight of a fiber fabric, a flow mesh or a peel ply divided by the area thereof.

## Examples

Example 1 and Comparative Example 1:

Two layers of biaxial glass fiber fabric having length × width of 800*700 mm were laid on the mold. A PVC foam core material 2 having length × width of 600*500 mm (in the Comparative Example: PVC foam core material 1) was placed on the glass fiber fabric, wherein the grooved side pointed upward. The core material was placed on the glass fiber fabric, wherein the grooved side pointed upward.
Two layers of biaxial glass fiber fabric having length × width of 800*700 mm were laid on the core material. A peel ply with the same size was laid on and covered the entire glass fiber fabric.
A flow mesh 2 having length × width of 700*450 mm (in the Comparative Example 1: flow mesh 1) was placed on the peel ply. Three edges of the flow mesh are 3 to 5 cm away from the edges of the foam core material. The injection edge of the flow mesh is flush with the edge of the glass fiber fabric.

A flow runner 2 having a length of 300 mm (in Comparative Example 1: flow runner 1) was cut out and placed on the injection edge of the flow mesh. Two loops of adhesive sealing strips were stuck around the layers laid in the mold. Then, said layers were sealed with two layers of vacuum bag.

After dehumidification by heating under vacuum, the resin (Example 1: infusion of a polyurethane resin/polyurethane composition, Comparative Example 1: infusion of an epoxy resin) was infused, and the infusion time and the amount of the used resin were recorded.

The product was demolded after curing by heating. The amount of resin in the tubes, the weight of the flow mesh (including the resin) and the weight of the final composite were recorded, as shown in Table 2.

Table 2 - Comparison of absorption amounts of Example 1 and Comparative Example 1

| Material category | Comparative Example 1 (epoxy resin) | | | | Example 1 (polyurethane resin) | | | | Remarks |
|---|---|---|---|---|---|---|---|---|---|
| | specification | size | weight | Resin absorption | specification | size | weight | Resin absorption | |
| Flow mesh | 200g/$m^2$ | 44.5*54 cm | 270.5g | 910.8g/$m^2$ | 100g/$m^2$ | 56.5*46 cm | 152g | 484.8 g/$m^2$ | 46% reduction |
| Flow runner | Φ18mm | 300 mm | 150.5g | 501.6g/m | Φ8mm | 300 mm | 38 | 94.2 g/m | 81% reduction |
| PVC foam core | groove spacing 20*20mm | 42.5*36 cm | 415.5g | 211.6g/$cm^3$ | groove spacing 30*30mm | 40.5*38 cm | 328.7g | 153.6g/$cm^3$ | 27% reduction |
| Infusion time | 5min 20s | | | | Infusion time | 4min 30s | | | |
| Infusion effect | good | | | | Infusion effect | good | | | |

It can be seen from the detection results of the above Example and Comparative Example that the method for preparing a polyurethane composite using appropriate core materials, flow meshes and flow runners of the present invention has good infusion effect. A polyurethane composite with superior quality was obtained. At the same time, the amount of waste resin was greatly reduced, thereby saving raw materials, saving energy and cost, and reducing the weight of the composite. Moreover, as compared with Comparative Example 1, the infusion time was also shortened and the production efficiency was improved in Example 1.

It should be noted that in actual production, the preparation of large parts requires thicker flow runners than those for the laboratory. In the prior art, the diameter of the flow runner for epoxy resins is usually 25 mm or more. By the method of the present invention, a flow runner having a diameter of 20 mm, 18 mm or less can be used. That is, the diameter of the flow runner can be reduced by 20%, preferably by about 28%.

While the invention has been described in detail as above for the purposes of the present invention, it is understood that the detailed description is only exemplary. In addition to the contents defined by the claims, various changes can be made by those skilled in the art without departing from the spirit and scope of the invention.

## Claims

**1.** A method for preparing a polyurethane composite by a vacuum infusion process, comprising:

a) placing at least a core material having a groove spacing of > 20 mm, preferably ≥ 25 mm, at least a flow medium having a gram weight of <200 g/$m^2$, preferably ≤160 g/$m^2$, more preferably 90 to 130 g/$m^2$ and at least a reinforcing material in a mold;
b) dehumidifying the core material, the flow medium and the reinforcing material by heating under vacuum;
c) introducing the polyurethane composition into the mold via a flow runner having a diameter of <25 mm, preferably ≤20 mm, more preferably <18 mm; and
d) demolding after curing to obtain the polyurethane composite.

**2.** The method according to claim 1, **characterized in that** the step b) further comprises:

covering the core material, the flow medium and the reinforcing material with a first film, sealing the rim of the first film with the mold, and vacuumizing between the first film and the mold;
laying a second film to cover the first film, fixing the second film, sealing the rims of the first film and the second film and preserving an air inlet channel and an air outlet channel;
heating the mold while filling hot air between the first film and the second film, providing a temperature close to the mold temperature for the upper surface of the first film.

**3.** The method according to claim 1 or 2, **characterized in that** the heating is one, two or more selected from the group consisting of electric blanket heating, electric film heating, microwave heating, infrared heating and hot air heating.

**4.** The method according to claim 1 or 2, **characterized in that** the reinforcing material is selected from the group consisting of entangled glass fiber layers, glass fiber woven fabrics and glass fiber gauzes, cut or ground glass fibers or mineral fibers, as well as fiber mats, fiber nonwovens and fiber knits based on polymer fibers, mineral fibers, carbon fibers, glass fibers or aramid fibers, and mixtures thereof, more preferably glass fiber mats or glass fiber nonwovens.

**5.** The method according to claim 1 or 2, **characterized in that** the core material is preferably balsa wood, PVC foam, SAN foam, polyurethane foam, PS foam, PMI foam and PET foam.

**6.** The method according to claim 1 or 2, **characterized in that** the flow medium comprises a peel ply.

**7.** The method according to claim 6, **characterized in that** the peel ply is a polyester peel ply.

**8.** The method according to claim 1 or 2, **characterized in that** the polyurethane composition comprises the following components:

a component A, comprising one or more organic polyisocyanates;
a component B, comprising:

b1) one or more organic polyols, which is present in a content of 21 to 60 wt%, preferably 21 to 40 wt%, based on the total weight of the polyurethane composition as 100 wt%;
b2) one or more compounds having the structure of formula (I)

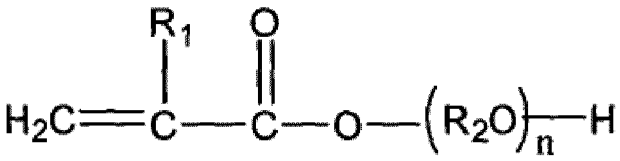

I

wherein R1 is selected from hydrogen, methyl or ethyl; R2 is selected from an alkylene group having 2 to 6 carbon atoms, 2,2-di(4-phenylene)-propane, 1,4-xylylene, 1,3-xylylene, 1,2-xylylene; n is an integer selected from 1 to 6; and

a component C, a free radical initiator.

**9.** The method according to claim 8, **characterized in that** the organic polyol has a functionality of 1.7 to 6, preferably 1.9 to 4.5 and a hydroxyl value of 150 to 1100 mg KOH/g, preferably 150 to 550 mg KOH/g.

**10.** The method according to claim 8 or 9, **characterized in that** b2) is present in a content of 4.6 to 33 wt%, based on the total weight of the polyurethane composition as 100 wt%.

**11.** The method according to claim 9 or 10, **characterized in that** the component b2) is one, two or more selected from the group consisting of hydroxyethyl methacrylate, hydroxypropyl methacrylate, hydroxybutyl methacrylate, hydroxyethyl acrylate, hydroxypropyl acrylate and hydroxybutyl acrylate.

**12.** The method according to claim 1 or 2, **characterized in that** the method further comprises:

providing a reaction injection device (40), which comprises at least two storage tanks (48, 49) for accommodating the components of the polyurethane composition, a vacuumizing device (50) and feed units (44a, 44b), wherein each of the feed units (44a, 44b) is connected to the storage tank (48, 49) via a feed line (41, 42) and a mixing unit (43), the components from the feed units (44a, 44b) are mixed together;
wherein the rim of the mold is sealed and the mold is connected to at least a first injection line (31), which can be used for vacuumizing the mold (5) and supplying the mixed components to the mold (5); and the mold comprises optionally a drying channel (32) for providing a drying gas (33);
during the vacuum infusion, the drying gas is supplied to the mold to dry the core material, the flow medium and the reinforcing material (21) placed in the mold; and the mold (5) is vacuumized by means of a vacuum source (34), and the mold is connected to the reaction injection device (40) via an injection line (45) at the first injection line (31); and mold can be vacuumized via the injection line (45) through a laterally closable outlet (46), which is connected to a vacuum source (47);
drying the mold (5) and the core material, the flow medium and the reinforcing material (21) contained therein, as well as the injection line (45) and optionally the feed unit (44a, 44b)/mixing unit (43), wherein optionally, the drying gas (33) can be introduced via the drying channel (32);
beginning the vacuum infusion process with introducing the degassed components in the feed line (41, 42) from the storage tanks (48, 49) into the feed units (44a, 44b) of the reaction injection device (40), and obtaining the polyurethane composition from the components in the mixing unit (43), wherein the outlet (46) of the vacuum source (47) is closed before the polyurethane composition arrives;
injecting the polyurethane composition into the mold (5) via the injection line (31), while vacuumizing the mold (5) via the drying channel (32) by the vacuum source (34), wherein the injection pressure at the injection port of the injection line (31) is measured and kept lower than the external atmospheric pressure.

**13.** A polyurethane composite obtained by the method for preparing a polyurethane composite by a vacuum infusion process according to any one of claims 1 to 12.

**14.** Use of the polyurethane composite according to claim 13 in a wind turbine blade.

**15.** A polyurethane product comprising a polyurethane composite obtained by the method for preparing a polyurethane composite by a vacuum infusion process according to any one of claims 1 to 12.

**16.** The polyurethane product according to claim 15, **characterized in that** the polyurethane product is preferably a wind turbine blade, more preferably a spar cap, a web plate, a blade root and/or a blade housing of a wind turbine blade.

Figure 1

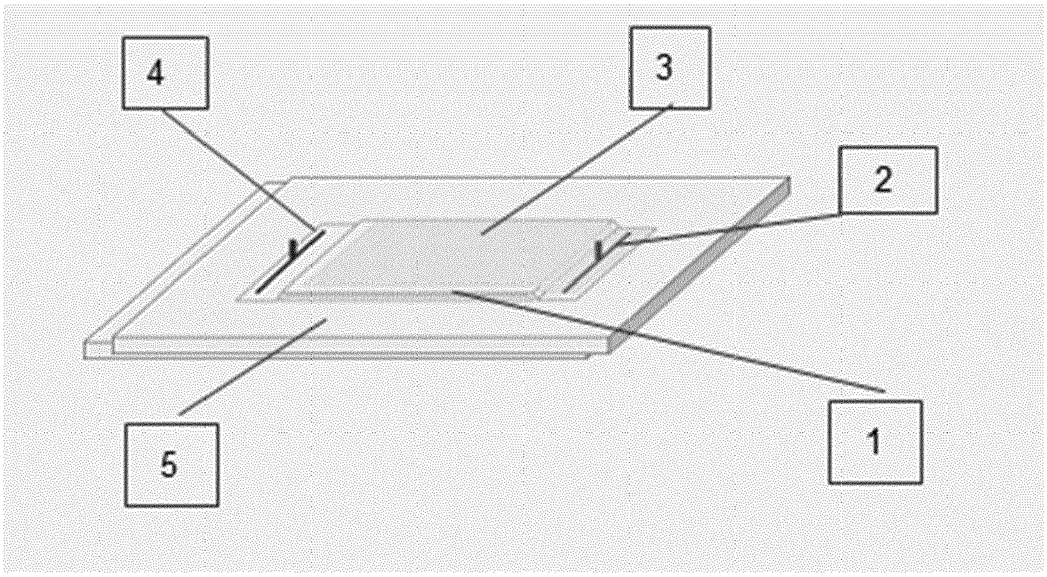

Figure 2

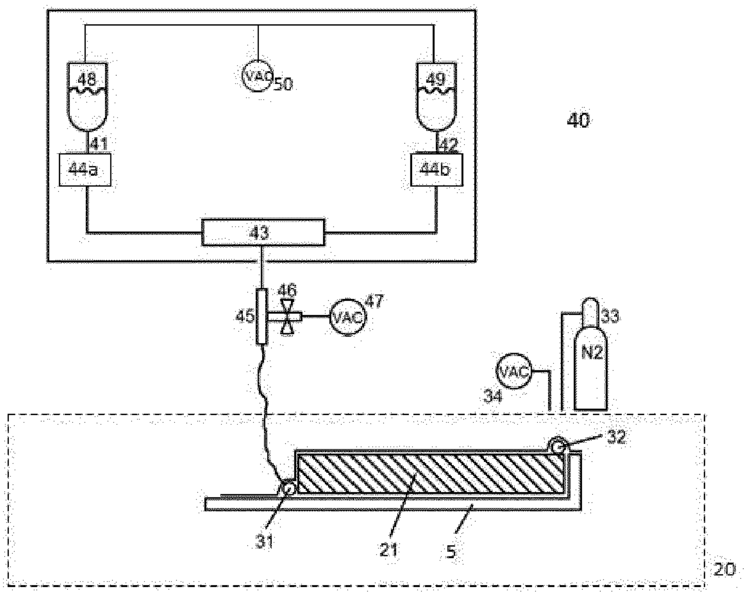
48
VAC
50
49
40
41
42
44a
44b
43
46
47
45
VAC
33
N2
VAC
34
32
31
21
5
20

Europäisches Patentamt
European Patent Office
Office européen des brevets

# EUROPEAN SEARCH REPORT

Application Number
EP 19 18 5708

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (IPC) |
| X<br><br>Y<br><br>A | EP 1 721 719 A1 (TORAY INDUSTRIES [JP]) 15 November 2006 (2006-11-15)<br>* claims 1,32,42,43,46,47,49; figures 1,4-6,8-11,18; examples 1-4 *<br>* paragraphs [0019], [0021], [0024], [0025], [0036], [0040], [0050], [0058] - [0062], [0072], [0074], [0078] - [0080], [0085], [0086], [0090], [0091] *<br>* paragraphs [0100], [0105], [0107], [0109], [0115], [0126], [0127], [0131] *<br>----- | 1,3-7, 13,15,16<br><br>1,3-6, 8-16<br><br>2 | INV.<br>B29C70/02<br>B29C70/08<br>B29C70/44<br>B29C70/54<br>B29D99/00<br><br>ADD.<br>B29B7/76<br>B29B7/86<br>B29K75/00<br>B29K675/00<br>B29L31/08<br>F03D1/06 |
| Y | WO 2017/009348 A1 (COVESTRO DEUTSCHLAND AG [DE]; COVESTRO POLYMERS CO LTD [CN]) 19 January 2017 (2017-01-19)<br>* claims 1,10,12,13; figure 8 *<br>* page 1, paragraph 4 *<br>* page 2, lines 1-15 *<br>* page 2, paragraph 25 - page 3, column 4 *<br>* page 2, line 37 - page 3, line 4 *<br>* page 4, line 37 - page 5, line 7 *<br>* page 15, lines 6-28 *<br>-----<br>-/-- | 1,3 | TECHNICAL FIELDS SEARCHED (IPC)<br>B29C<br>B29B<br>F03D<br>B29D<br>B29K<br>B29L |

The present search report has been drawn up for all claims

| Place of search | Date of completion of the search | Examiner |
|---|---|---|
| The Hague | 31 January 2020 | Baran, Norbert |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 19 18 5708

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (IPC) |
| Y | WO 2009/003476 A1 (LM GLASFIBER AS [DK]; MIKKELSEN TOMMY [DK]; STAGE MORTEN [DK]) 8 January 2009 (2009-01-08) * claims 1,4,5,8,10,12 * * page 2, paragraphs 3,4 * * page 3, paragraph 3 * * page 5, paragraph 2 * * page 7, paragraph 2 * * page 8, paragraph 1 * * page 10, paragraph 3 * * page 11, line 31 - page 12, line 13 * * page 13, paragraphs 4,6 * * page 15, paragraphs 3,4 * * page 17, paragraph 1 * * page 18, paragraph 5 * * page 19, paragraph 1 * ----- | 1,4,5 | |
| Y | EP 2 886 322 A1 (BAYER MATERIALSCIENCE AG [DE]) 24 June 2015 (2015-06-24) * paragraphs [0013], [0014], [0017], [0024], [0028], [0062], [0064]; claims 1-7,9-15 * ----- | 1,4-6, 13-16 | TECHNICAL FIELDS SEARCHED (IPC) |
| Y | WO 2016/162348 A1 (COVESTRO DEUTSCHLAND AG [DE]; COVESTRO POLYMERS (CHINA) CO LTD [CN]) 13 October 2016 (2016-10-13) * claims 1,6,8,23; example 1 * ----- | 1,12-16 | |
| Y | WO 2012/123280 A1 (HUEBERS VERFAHRENSTECH [DE]; BAYER MATERIALSCIENCE AG [DE] ET AL.) 20 September 2012 (2012-09-20) * claims 1,6,13-15,19,26; figures 1,4 * * page 12, lines 7-32 * ----- -/-- | 1,12 | |

The present search report has been drawn up for all claims

| Place of search | Date of completion of the search | Examiner |
|---|---|---|
| The Hague | 31 January 2020 | Baran, Norbert |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 19 18 5708

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2019/051637 A1 (COVESTRO DEUTSCHLAND AG [DE]) 21 March 2019 (2019-03-21)<br>* claims 1,2,4-6,9-14; table 1 *<br>* page 10, paragraphs 7,8 *<br>* page 11, paragraphs 1-4,6 *<br>* page 13 *<br>----- | 1,4,5, 8-11, 13-16 | |
| Y | WO 2015/155195 A1 (BAYER MATERIALSCIENCE AG [DE] ET AL.)<br>15 October 2015 (2015-10-15)<br>* claims 1,3,4,6-9,11,12,14-16 *<br>* page 13, paragraph 5 *<br>* page 14, paragraph 4 *<br>* page 15, paragraphs 1,3 *<br>* page 16, lines 6-7 *<br>----- | 1,4,5, 8-11, 13-16 | |

TECHNICAL FIELDS SEARCHED (IPC)

The present search report has been drawn up for all claims

2

| Place of search | Date of completion of the search | Examiner |
|---|---|---|
| The Hague | 31 January 2020 | Baran, Norbert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 19 18 5708

This annex lists the patent family members relating to the patent documents cited in the above-mentioned European search report. The members are as contained in the European Patent Office EDP file on
The European Patent Office is in no way liable for these particulars which are merely given for the purpose of information.

31-01-2020

| Patent document cited in search report | Publication date | Patent family member(s) | Publication date |
|---|---|---|---|
| EP 1721719 A1 | 15-11-2006 | AU 2005213807 A1 | 25-08-2005 |
| | | EP 1721719 A1 | 15-11-2006 |
| | | EP 2565007 A1 | 06-03-2013 |
| | | EP 2565019 A1 | 06-03-2013 |
| | | KR 20060134105 A | 27-12-2006 |
| | | US 2007182071 A1 | 09-08-2007 |
| | | US 2011192531 A1 | 11-08-2011 |
| | | WO 2005077632 A1 | 25-08-2005 |
| WO 2017009348 A1 | 19-01-2017 | CN 106335141 A | 18-01-2017 |
| | | EP 3322570 A1 | 23-05-2018 |
| | | US 2018200924 A1 | 19-07-2018 |
| | | WO 2017009348 A1 | 19-01-2017 |
| WO 2009003476 A1 | 08-01-2009 | AT 493262 T | 15-01-2011 |
| | | CN 101754849 A | 23-06-2010 |
| | | DK 2160286 T3 | 18-04-2011 |
| | | EP 2160286 A1 | 10-03-2010 |
| | | PL 2160286 T3 | 31-05-2011 |
| | | US 2010189973 A1 | 29-07-2010 |
| | | US 2013266449 A1 | 10-10-2013 |
| | | WO 2009003476 A1 | 08-01-2009 |
| EP 2886322 A1 | 24-06-2015 | NONE | |
| WO 2016162348 A1 | 13-10-2016 | CN 106142593 A | 23-11-2016 |
| | | DK 3280586 T3 | 05-08-2019 |
| | | EP 3280586 A1 | 14-02-2018 |
| | | ES 2739131 T3 | 29-01-2020 |
| | | PL 3280586 T3 | 29-11-2019 |
| | | US 2018072005 A1 | 15-03-2018 |
| | | WO 2016162348 A1 | 13-10-2016 |
| WO 2012123280 A1 | 20-09-2012 | DE 102011013742 A1 | 13-09-2012 |
| | | WO 2012123280 A1 | 20-09-2012 |
| WO 2019051637 A1 | 21-03-2019 | WO 2019051637 A1 | 21-03-2019 |
| | | WO 2019053061 A1 | 21-03-2019 |
| WO 2015155195 A1 | 15-10-2015 | CA 2944545 A1 | 15-10-2015 |
| | | CN 104974502 A | 14-10-2015 |
| | | EP 3129422 A1 | 15-02-2017 |
| | | JP 2017513979 A | 01-06-2017 |
| | | US 2017037203 A1 | 09-02-2017 |
| | | US 2019225761 A1 | 25-07-2019 |
| | | WO 2015155195 A1 | 15-10-2015 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 19 18 5708

This annex lists the patent family members relating to the patent documents cited in the above-mentioned European search report. The members are as contained in the European Patent Office EDP file on
The European Patent Office is in no way liable for these particulars which are merely given for the purpose of information.

31-01-2020

| Patent document cited in search report | Publication date | Patent family member(s) | Publication date |
|---|---|---|---|
| | | | |

EPO FORM P0459

For more details about this annex : see Official Journal of the European Patent Office, No. 12/82

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 201619252 U
- CN 107187080 A
- CN 101767463 A
- CN 101754849 B
- CN 101456256 A
- CN 104974502 A
- GB 1200942016 T


### Non-patent literature cited in the description


- Makromolekulare Stoffe. Houben Weyl, Methoden der Organischen Chemie. Georg Thieme Verlag, 1963, vol. XIV/2, 17
- **YIJUN LIU.** Handbook of Polyurethane Raw Materials and Auxiliaries. 01 April 2005
- **HOUJUN LIU.** Polyurethane Elastomer. August 2012